Europäisches Patentamt

European Patent Office

Office européen des brevets

(19)

(11) Veröffentlichungsnummer: **0 262 523**
B1

(12) # EUROPÄISCHE PATENTSCHRIFT

(45) Veröffentlichungstag der Patentschrift:
04.07.90

(21) Anmeldenummer: 87113627.1

(22) Anmeldetag: 17.09.87

(51) Int. Cl.⁵: **B65D 85/68**, B65D 1/38,
H02K 15/00

(54) Transportmittel zur Aufname von säulenartigen Transportgütern.

(30) Priorität: 30.09.86 DE 3633200

(43) Veröffentlichungstag der Anmeldung:
06.04.88 Patentblatt 88/14

(45) Bekanntmachung des Hinweises auf die Patenterteilung:
04.07.90 Patentblatt 90/27

(84) Benannte Vertragsstaaten:
AT CH DE FR GB IT LI SE

(56) Entgegenhaltungen:
FR-A- 1 316 593
FR-A- 2 196 633
LU-A- 59 570
US-A- 3 272 378
US-A- 3 327 885

PATENT ABSTRACTS OF JAPAN, Band 8,
Nr. 184 (E-415) [2240], 27. Juni 1986; &
JP-A-61 30 929 (TOSHIBA CORP.) 13-02-1986

(73) Patentinhaber: Siemens Aktiengesellschaft,
Wittelsbacherplatz 2, D-8000 München 2(DE)

(72) Erfinder: Andersch, Walter, Rosenstrasse 31,
D-8011 Helmstetten(DE)
Erfinder: Swonke, Andreas, Dipl.-Ing.(FH),
Flürleinstrasse 18, D-8700 Würzburg(DE)
Erfinder: Rohm, Hans, Dipl.-Ing.,
Jakob-Reichert-Strasse 16, D-6973 Boxberg(DE)
Erfinder: Reisenweber, Walter, Dipl.-Ing.,(FH), Im
Weingarten 8, D-8744 Mellrichstadt(DE)

## Beschreibung

Die Erfindung bezieht sich auf ein Transportmittel zur Aufnahme von säulenartigen Transportgütern gemäß Oberbegriff des Anspruchs 1; ein derartiges Transportmittel ist z.B. aus der US-A 3 327 885 zur Aufnahme von Flaschen bekannt.

Gemäß Aufgabe vorliegender Erfindung soll ein einfach herstellbares und insbesondere durch Handhabungsautomaten auf einfache Weise beschickbares bzw. wieder entleerbares Transportmittel für rotationssymmetrische Transportgüter, insbesondere zur schonenden Beschickung und Halterung für Rotoren bzw. Rotorenpakete mit eingesteckter Rotorwelle elektrischer Kleinmotoren, geschaffen werden, mit denen die Rotoren bzw. Rotorpakete zum Beispiel im Zuge einer vollautomatisch ablaufenden Motorenfertigung vom Ort der Rotorvorfertigung zum Ort der kompletten Motormontage transportiert bzw. zwischengestapelt werden können.

Die Lösung dieser Aufgabe gelingt bei einem Transportmittel der eingangs genannten Art erfindungsgemäß durch die Lehre des Anspruchs 1; vorteilhafte Ausgestaltungen der Erfindung sind jeweils Gegenstand der Unteransprüche.

Das erfindungsgemäße Transportmittel läßt ohne Verschlechterung der Packungsdichte den Zugriff eines automatischen Greifers zur Beschickung bzw. Entnahme der Rotoren bzw. Rotorpakete mit eingesteckter Rotorwelle zwischen den Palettiersäulen durch Umgreifen des Rotorblechpaketes und ihre sichere Auflage bzw. zentrierte Ausrichtung in ihrer Packungsstellung zu, so daß auch über ihre gesamte Länge zwischen die Palettiersäulen eintauchende und in den an die Palettiersäulen angeformten Füßen zentrierte Rotoren bzw. Rotorpakete im Zuge einer automatischen Fertigung mechanisch einfach greifbar sind bzw. sich ein Greifen der Rotoren bzw. Rotorpakete an der vor Beschädigung zu schützenden geschliffenen Rotorwelle erübrigt.

Eine besonders hohe Packungsdichte bei gleichzeitig gewährleisteter Zugriffsmöglichkeit des Greifarmes eines beschickenden Automaten ist dadurch erzielbar, daß die Palettiersäulen jeweils derart in Reihen hintereinander und von Reihe zu Reihe zueinander versetzt angeordnet sind, daß jeweils von einer Palettiersäule je eine Teilumfangsfläche von vier im Umkreis eingestellten säulenartigen Rotoren umfaßt ist. Zweckmäßigerweise sind die Palettiersäulen an ihren Außenflächen hohlkehlenförmig an die zu umfassende äußerste Teilumfangsfläche der Rotoren, d.h. an die Umfangsfläche der Blechpakete der Rotoren angepaßt. Werden die Palettiersäulen als vorzugsweise einstückig gespritzte bzw. geschäumte Kunststoff-Einzelteile gefertigt und einzeln auf der insbesondere aus Aluminium bestehenden Transportpalette befestigt, so ergibt sich einerseits eine leichte Anpaßmöglichkeit an Transportgüter verschiedenen Durchmessers und andererseits auch bei geringen Stückzahlen ein nur kleiner Fertigungsaufwand, wobei darüber hinaus im Verschleißfall nur Einzeltragteile mit geringem Aufwand auf einfache Weise ausgetauscht werden müssen. Bei größeren Stückzahlen sind vorteilhafterweise die Palettiersäulen mit der Transportpalette einstückig aus Kunststoff gespritzt bzw. geschäumt.

Die Erfindung sowie weitere vorteilhafte Ausgestaltungen der Erfindung werden im folgenden anhand eines schematischen Ausführungsbeispieles in der Zeichnung näher erläutert; darin zeigen:

Fig. 1 eine Draufsicht auf die Einsteckseite auf eine in einen Transportbehälter eingelassene Transportpalette mit darauf befestigten Palettiersäulen;

Fig. 2 einen Schnitt gemäß Schnittverlauf I–I des in Fig. 1 dargestellten Transportmittels;

Fig. 3 in perspektivischer Darstellung eine einzelne Palettiersäule;

Fig. 4 in perspektivischer Explosionsdarstellung eine einzelne in einem Transportbehälter 1 einzulassende Transportpalette.

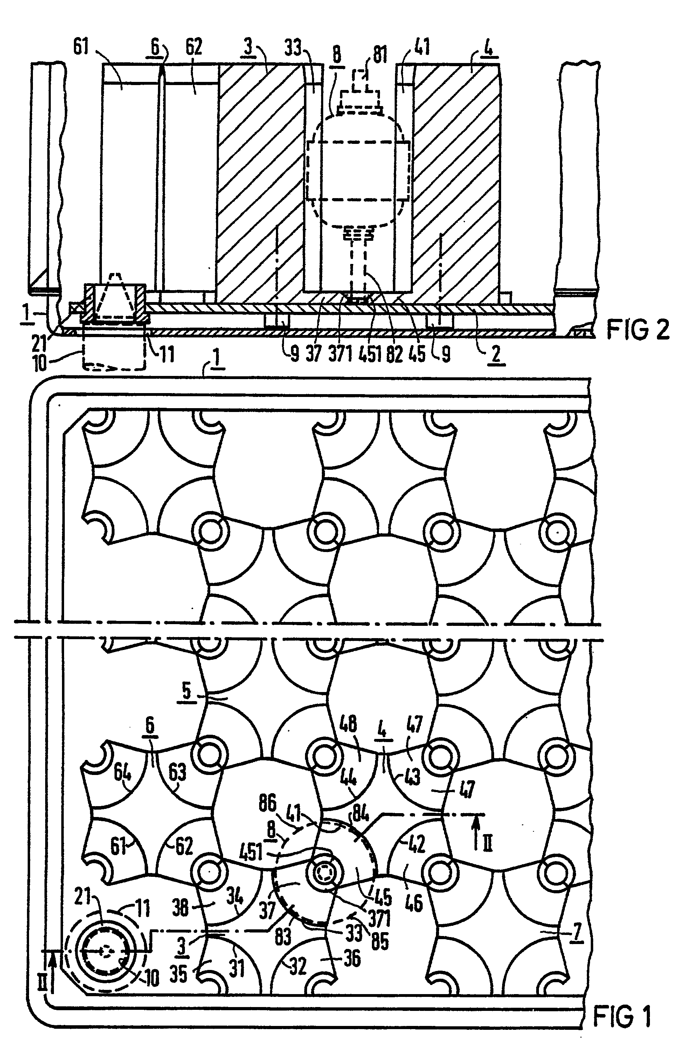

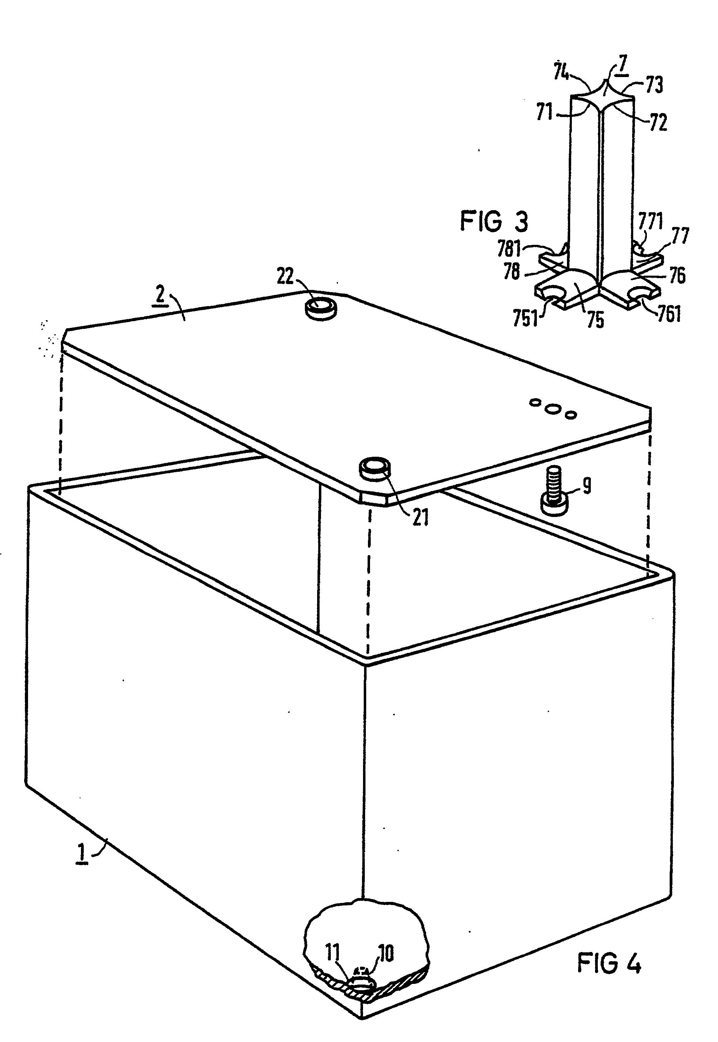

Fig. 1, 2 zeigen eine in einen Transportbehälter 1 von dessen oberer offener Seite her eingelegte Transportpalette 2 mit darauf befestigten Palettiersäulen, von denen in Fig. 1 nur fünf Säulen mit einzelnen Bezugszeichen 3–7 versehen sind. Der deutlicheren Darstellung wegen ist als Transportgut nur ein einzelnes Rotorpaket 8 mit beidseitig überstehenden Rotorwellenenden 81,82 von der axial oberen offenen Seite des Transportbehälters bzw. der Transportpalette zwischen die Palettiersäulen 3,4 eingesteckt.

Die Palettiersäulen sind - wie beispielsweise aus der Zuordnung der Palettiersäulen 6,4 einerseits und der Palettiersäulen 5,3,7 andererseits ersichtlich - derart in Reihen hintereinander und von Reihe zu Reihe zueinander versetzt angeordnet, daß jeweils von einer Palettiersäule - wie in FIG 1 anhand der Palettiersäulen 3 bzw.4 ersichtlich - je eine Teilumfangsfläche von vier im Umkreis eingestellten säulenartigen Rotoren umfaßbar ist. Die Palettiersäule 4 weist dazu zum Beispiel vier hohlkehlenartig der äußeren Umfangsfläche des eingesteckten Rotorpaketes 8 angepaßte Außenflächen 41-44 und die Palettiersäule 3 hohlkehlenförmige Außenflächen 31-34 auf. Die beiden gegenüberliegenden hohlkehlenförmigen Außenflächen 33 bzw.41 der Palettiersäulen 3 bzw.4 umfassen das Rotorpaket 8 an zwei äußeren Teilumfangsflächen 83,84 derart, daß in Umfangsrichtung zwischen diesen Teilumfangsflächen 83,84 von außen zugängliche Zwischenumfangsflächen 85,86 frei bleiben, an denen z.B. in hier nicht näher dargestellter Art von der offenen Seite der Palettiersäulen her ein Greifer eines Handhabungsgerätes eingreifen, das Rotorpaket 8 umfassen und aus seiner Transportlage nach außen herausheben kann.

An die Palettiersäulen sind transportpalettenseitig im rechten Winkel sternförmig abstehende Auflagefüße (z.B. 45-48) hinsichtlich der Palettiersäule 4 einstückig angeformt, die einerseits als Auflagehilfe für die Palettiersäulen auf der Transportpalette 2 dienen und andererseits gleichzeitig als Unterlage für ein nacktes Rotorpaket 8 dienen können, das mit seiner unteren Stirnseite dann auf diesen Auflagefüßen aufliegt. Falls die Rotorpakete 8 bereits eine eingedrückte Rotorwelle mit einem axial vorstehenden Rotorwellenende 82 aufweisen, können die Rotorpakete beim Einstecken zwischen die Palettiersäulen 3,4 auf einfache Weise dadurch zentriert werden, daß an die vorderen voreinanderstoßenden freien Enden der Auflagefüße 37 bzw.45 Zentriertrichter 371 bzw. 451 angeformt sind, in die das Rotorwellenende 82 dann geführt eingeleitet.

Zur Verdeutlichung zeigt FIG 3 in perspektivischer Sicht eine einzelne Palettiersäule mit ihren hohlkehlenförmigen Außenflächen 71-74 und ihren transportpalettenseitig einstückig angeformten Auflagefüßen 75-78, an deren freien Enden die einzelnen Zentriertrichter 751,761,771,781 eingeformt sind. In hier nicht näher dargestellter Weise sind mittig in das transportpalettenseitige Ende der Palettiersäulen Schraubgewinde eingebracht, in die Schrauben 9 von der Unterseite der Transportpalette 2 zur Halterung der Palettiersäulen auf der Transportpalette einschraubbar sind. Zweckmäßigerweise sind in eine als Einheitsbauteil vorgesehenen Transportpalette mehrere Reihen von vorgebohrten Schraublöchern derart angebracht, daß zur Anpassung an verschiedene Durchmesser der zu transportierenden einzusteckenden rotationssymmetrischen Transportgüter die Palettiersäulen umsteckbar sind. Zum Schutz gegen Verschmutzung und/oder als einfaches Mittel zum Zwischenstapeln werden die bestückten Transportpaletten 2 in Transportbehälter 1 eingelegt. Um z.B. bei der endgültigen Motor-Montage zur Entnahme der Rotoren 8 die Transportpaletten 2 trotz Verbleibens in dem Transportbehälter 1 relativ zum Roboter-Greiferarm auf einfache Weise ausrichten zu können, ist nach einer Ausgestaltung der Erfindung vorgesehen, die Transportpalette 2 mit Indexierbuchsen 21,22 zu versehen, in die Indexiernocken 10 einer ausrichtenden Ablagestation durch Indexierdurchstecköffnungen 11 im Boden des Transportbehälters 1 hindurch eingreifen; zum Ausgleich von Unebenheiten des Bodens des Transportbehälters 1 kann in vorteilhafter Weise die Transportpalette 2 zusätzlich durch die Indexiernocken 10 auf ebene Lage angehoben werden.

## Patentansprüche

1. Transportmittel zur Aufnahme von säulenartigen, in Säulenachsrichtung eingestellten und durch Umfangsumfassung in dieser Stellung gehaltenen Transportgütern, insbesondere für Rotorpakete von Elektro-Kleinmotoren, mit einer Transportpalette (2) mit darauf befestigten, die säulenartigen Transportgüter (Rotoren 8) an zwei äußeren, einander gegenüberliegenden Teilumfangsflächen (83, 84) unter Freilassung von äußerlich zugänglichen Zwischenumfangsflächen (85, 86) umfassenden Palettiersäulen (z.B. 3 bzw. 4), gekennzeichnet durch transportpalettenseitig an die Palettiersäulen (z.B. 3 bzw. 4) angeformte Auflagefüße (z.B. 35-38 bzw. 45-48) bzw. Zentriertrichter (z.B. 371 bzw. 451) für die einzusteckenden Transportgüter (Rotoren 8).

2. Transportmittel nach Anspruch 1, dadurch gekennzeichnet, daß die Palettiersäulen jeweils derart in Reihen hintereinander und von Reihe zu Reihe zueinander versetzt angeordnet sind, daß jeweils von einer Palettiersäule je eine Teilumfangsfläche von vier im Umkreis eingestellten säulenartigen Transportgütern (Rotoren 8) umfaßt ist.

3. Transportmittel für rotationssymmetrische Transportgüter, insbesondere für Rotoren bzw. Rotorpakete von Elektrokleinmotoren nach Anspruch 1 und/oder 2, gekennzeichnet durch hohlkehlenförmig in Anpassung an die zu umfassenden äußersten Teilumfangsflächen (z.B. 83, 84) der Transportgüter (Rotoren 8) ausgebildete Säulenaußenflächen (z.B. 31-34 bzw. 41-44) der Palettiersäulen (z.B. 3 bzw. 4).

4. Transportmittel nach Anspruch 3, dadurch gekennzeichnet, daß jeweils eine Auflage bzw. Zentrierung für ein Transportgut (Rotor 8) aus zwei aneinanderstoßenden, je einer der einander gegenüberliegenden, das Transportgut (Rotor 8) umfassenden Palettiersäulen (z.B. 3 bzw. 4) zugehörigen Auflagefüßen (z.B. 37 bzw. 45) bzw. Zentriertrichtern (z.B. 371 bzw. 451) gebildet ist.

5. Transportmittel nach einem der Ansprüche 1-4, dadurch gekennzeichnet, daß die Palettiersäulen (z.B. 7), insbesondere durch Schraubbefestigung, einzeln auf der Transportpalette (2) befestigt sind (Fig. 3, 4).

6. Transportmittel nach einem der Ansprüche 1-5, dadurch gekennzeichnet, daß die Palettiersäulen und die Auflage- bzw. Zentrierfüße aus vorzugsweise einstückig gespritzten Kunststoff-Teilen bestehen.

7. Transportmittel nach einem der Ansprüche 1-5, dadurch gekennzeichnet, daß die Palettiersäulen und die Auflage- bzw. Zentrierfüße aus vorzugsweise einstückig geschäumten Kunststoff-Teilen bestehen.

8. Transportmittel nach einem der Ansprüche 1-7, dadurch gekennzeichnet, daß die Transportpalette und die Palettiersäulen Teile eines einstückigen, insbes. gespritzten bzw. geschäumten Kunststoffteils sind.

9. Transportmittel mit in einen umgebenden Transportbehälter eingelegter Transportpalette nach einem der Ansprüche 1-8, dadurch gekennzeichnet, daß zum Ausrichten der Transportpalette (2) relativ zu einer Beschickungs bzw. Entleerungsstation die Transportpalette (2) mit Indexierbuchsen (21, 23) versehen ist, in die Indexiernocken (10) einer Ablagestation durch Indexierdurchstecköffnungen (11) im Boden des Transportbehälters (1) hindurch eingreifen.

## Claims

1. Transport means for receiving columnar products to be transported, inserted in the column axis direction and held in this position by circumferential gripping, in particular for stacks of rotors of small electric motors, having a transport palette (2) with palette columns (e.g. 3 or 4) secured on it and surrounding the columnar products to be transported (rotors 8) on two outer partial circumferential areas (83, 84) lying opposite each other and leaving free intermediate circumferential areas (85, 86) accessible from the outside, characterised by support feet (e.g. 35–38 or 45–48) or centering funnels (e.g. 371 or 451), moulded onto the palette columns (e.g. 3 or 4) on their transport palette end, for the transported products (rotors 8) to be inserted.

2. Transport means according to claim 1, characterised in that the palette columns are each arranged in rows one behind the other and offset with respect to each other from row to row so that the partial circumferential areas of one palette column are surrounded respectively by four columnar transport products (rotors 8) inserted round it.

3. Transport means for rotationally symmetrical products to be transported, in particular for rotors or stacks of rotors of small electric motors according to claim 1 and/or 2, characterised by outer column areas (e.g. 31–34 or 41–44) of the palette columns (e.g. 3 or 4) in the form of channels adapted to the outermost partial circumferential areas (e.g. 83, 84) of the transport products (rotors 8) which are to be surrounded.

4. Transport means according to claim 3, characterised in that each support or centering means for a product to be transported (rotor 8) is formed from two abutting support feet (e.g. 37 or 45) or centering funnels (e.g. 371 or 451) belonging to one of the opposite palette columns (e.g. 3 or 4) surrounding the product to be transported (rotor 8).

5. Transport means according to one of claims 1 to 4, characterised in that the palette columns (e.g. 7) are secured individually, in particular by screw fastening, on the transport palette (2) (Fig. 3, 4).

6. Transport means according to one of claims 1 to 5, characterised in that the palette columns and the support or centering feet consist of plastics parts injected preferably in one piece.

7. Transport means according to one of claims 1 to 5, characterised in that the palette columns and the support or centering feet are of plastics parts foamed preferably in one piece.

8. Transport means according to one of claims 1 to 7, characterised in that the transport palette and the palette columns are parts of a one-piece plastics part, in particular an injected or foamed plastics part.

9. Transport means with a transport palette inserted into an enclosing transport container according to one of claims 1 to 8, characterised in that to align the transport palette (2) relatively to a loading or emptying station the transport palette (2) is provided with indexing bushings (21, 23 (sic)) into which indexing pins (10) of a delivery station engage through indexing passages (11) in the base of the transport container (1).

**Revendications**

1. Moyens de transport destinés à recevoir des produits à transporter, notamment des ensembles rotoriques de petits moteurs électriques, en forme de colonne, mis en place suivant la direction de l'axe de la colonne et maintenus en cette position en étant entourés sur le pourtour, comprenant une palette de transport (2) à laquelle sont fixées des colonnes de palettisation (par exemple 3 et 4) entourant, tout en laissant dégagées des surfaces périphériques intermédiaires (85, 86) accessibles de l'extérieur, les produits à transporter (rotors 8) en forme de colonne sur deux surfaces périphériques partielles extérieures (83, 84) opposées, caractérisés par des pieds d'appui (par exemple 35 à 38 et 45 à 48) ou par des cônes de centrage (par exemple 371 et 451) pour les produits à transporter (rotors 8) et issus côté de la palette de transport, des colonnes de palettisation (par exemple 3 et 4).

2. Moyens de transport suivant la revendication 1, caractérisés en ce que les colonnes de palettisation sont disposées les unes derrière les autres en rangées et décalées les unes par rapport aux autres d'une rangée à l'autre, de manière que chaque surface périphérique partielle de quatre produits à transporter (rotors 8) en forme de colonne placés en cercle soit entourée d'une colonne de palettisation.

3. Moyens de transport de produits à transporter de révolution, notamment de rotors ou de paquets rotoriques de petits moteurs électriques, suivant la revendication 1 et/ou 2, caractérisés par des surfaces extérieures (par exemple 31 à 34 et 41 à 44) des colonnes de palettisation (par exemple 3 et 4), constituées sous la forme de moulures creuses s'adaptant aux surfaces périphériques partielles (par exemple 83, 84) extérieures à entourer des produits à transporter (rotors 8).

4. Moyens de transport suivant la revendication 3, caractérisés en ce qu'un appui ou un centrage d'un produit à transporter (rotor 8) est constitué de deux pieds d'appui (par exemple 37 et 45) ou de deux cônes de centrage (par exemple 371 et 451) contigus, opposés l'un à l'autre et faisant partie de colonnes de palettisation (par exemple 3 et 4) entourant le produit à transporter (rotor (8).

5. Moyens de transport suivant l'une des revendications 1 à 4, caractérisés en ce que les colonnes de palettisation (par exemple 8) sont fixées (figures 3, 4) notamment par vissage, individuellement à la palette de transport (2).

6. Moyens de transport suivant l'une des revendications 1 à 5, caractérisés en ce que les colonnes de palettisation et les pieds d'appui et de centrage sont constitués avantageusement de pièces en matière plastique d'un seul tenant, moulées par injection.

7. Moyens de transport suivant l'une des revendications 1 à 5, caractérisés en ce que les colonnes de palettisation et les pieds d'appui et de centrage sont constitués de préférence de pièces en matière plastique mousse d'un seul tenant.

8. Moyens de transport suivant l'une des revendications 1 à 7, caractérisés en ce que la palette de transport et les colonnes de palettisation font partie d'une pièce en matière plastique d'un seul tenant, notamment sous forme de mousse ou moulée par injection.

9. Moyens de transport comprenant une palette de transport, insérée dans un conteneur de transport qui l'entoure, suivant l'une des revendications 1 à 8, caractérisés en ce que, pour orienter la palette de transport (2), par rapport à un poste de chargement ou de déchargement, la palette de transport (2) est munie de douilles d'indexation (21, 23), dans lesquelles pénètrent des ergots d'indexation (10) d'un poste de réception, en passant par des trous d'indexation (11) traversant le fond du conteneur de transport (1).

FIG 2

FIG 1

FIG 3

FIG 4